# EUROPEAN PATENT SPECIFICATION

(11) **EP 1 494 121 B1**
(45) Date of publication and mention of the grant of the patent: **11.07.2012**
(21) Application number: 03745952.6
(22) Date of filing: 07.04.2003
(51) Int. Cl.: H04L 29/06

(54) **COMPUTER, COMPUTER SECURITY SETTING METHOD, AND PROGRAM**
COMPUTER, COMPUTERSICHERHEITSEINSTELLVERFAHREN UND PROGRAMM
ORDINATEUR, PROCEDE DE REGLAGE DE LA SECURITE D'UN ORDINATEUR ET PROGRAMME CORRESPONDANT

(30) Priority: 11.04.2002 JP 2002109714
(43) Date of publication of application: 05.01.2005
(73) Proprietor: Lenovo (Singapore) Pte. Ltd., Singapore 486048 (SG)
(72) Inventor: OIE, Masaki c/o Yamato site IBM Japan Ltd., Yamato-shi, Kanagawa 242-8502 (JP)
(74) Representative: Schäfer, Horst
(86) International application number: PCT/JP2003/004419
(87) International publication number: WO 2003/085528

(56) References cited:
- WO-A1-99/65207
- WO-A2-02/084460
- JP-A- 9 152 990
- JP-A- 2000 224 197
- JP-A- 2001 147 849
- JP-A- 2002 055 729
- JP-A- 2002 073 565
- US-A- 6 166 688
- US-A1- 2002 032 786

## Description

### Technical Field

The present invention relates to a portable computer apparatus and a technology suitable for making settings such as security settings.

### Background Art

Today, portable "mobile devices" such as notebook PCs and PDA (Personal Digital Assistants) are widely used.

A user of a notebook PC (hereinafter simply referred to as a PC) connected to a network through a wireless LAN at his or her office, for example, may take the PC home and connects it to a network through a modem and an analog telephone line or connect it to the network on the go through his or her cellphone.

Recently, wireless LAN environments have been provided in certain areas in stations and business quarters. In such areas, one can connect to a network over the wireless LAN provided.

Furthermore, short-range wireless communication technologies such as Bluetooth are becoming widespread. One can use Bluetooth to carry out data communications at his or her office, home, and on the go with a LAN access point or another device through a modem.

When a PC is used in different environments, such as an office, home, on the go (hereinafter referred to as "mobile" as appropriate), the user must change settings on the PC at least for connecting it to a network each time he or she carries it into a different environment.

The setting change is obviously cumbersome because several to several dozens of settings must be changed and, if the changes are incorrect, the PC cannot be connected to the network.

To solve these problems, an arrangement is provided in some PCs that allows settings on them to be changed by the simple operation of selecting a using environment in a utility displayed on a taskbar or the like. Once setting for each of the environments has been made, it is not necessary to make complicated setting each time the PC is used in a different environment.

However, if the user selects wrong setting such as selecting setting for home at his or her office, for example, network connection failure arises. Furthermore, even if the PC can be connected to the network, another serious problem may occur: if the user is actually on the road, where a higher security level for a "mobile" environment should be set, and still uses the PC with a lower level security setting for "home", potential security hole may result.

If the security hole exists, unauthorized access from an other's device cannot effectively be prevented especially in an environment where a wireless LAN or Bluetooth is used to connect to the network.

US 2002 032786 A1 discloses an information device system including a terminal device and a personal computer. A record medium, which can be read by the personal computer, contains a program for judging what communication state the system is in, a cable communication state, a wireless communication state, or a non-communication state, and restricting processing the personal computer can perform in accordance with the result of the judgment. The degree of restriction is lowest when the system is in the cable communication state, intermediate when the system is in the wireless communication state, and highest when the system is in the non-communication state.

WO 99/65207 discloses a computer network security system and method wherein access to network resources is based on information that includes the location of the connecting user. The less trusted the location of the user, the more the access rights assigned to the user are restricted.

US 6,166,688 discloses a data processing system and method for disabling a portable computer in response to the portable computer being moved outside of an authorized area of use. A determination is made regarding whether the portable computer is located outside of the authorized area. If the portable computer is moved outside of the authorized area, the portable computer is disabled. The portable computer is inoperable when disabled.

### Summary of the Invention

The present invention provides a portable computer apparatus as claimed in claim 1, a method as claimed in claim 5 and a computer program product as claimed in claim 8.

### Brief Description of the Drawings

Figure 1 shows a configuration of a computer apparatus according to the present embodiment of the present invention;
Figure 2 shows a configuration of a portion of the computer apparatus that involves in setting control with Bluetooth;
Figure 3 shows an example of the environment of the computer apparatus for which the security level "home" is to be set;
Figure 4 shows an example of the environment of the computer apparatus for which the security level "office" is to be set;
Figure 5 shows an example of the environment of the computer apparatus for which the security level "mobile" is to be set;
Figure 6 shows an example of a number of levels security settings;
Figure 7 shows a process flow for setting initial security values; and
Figure 8 shows a process flow for changing security settings according to environments in which the PC is used.

### Best Mode for Carrying Out the Invention

Embodiments of the present invention will be detailed below with respect to the accompanying drawings.

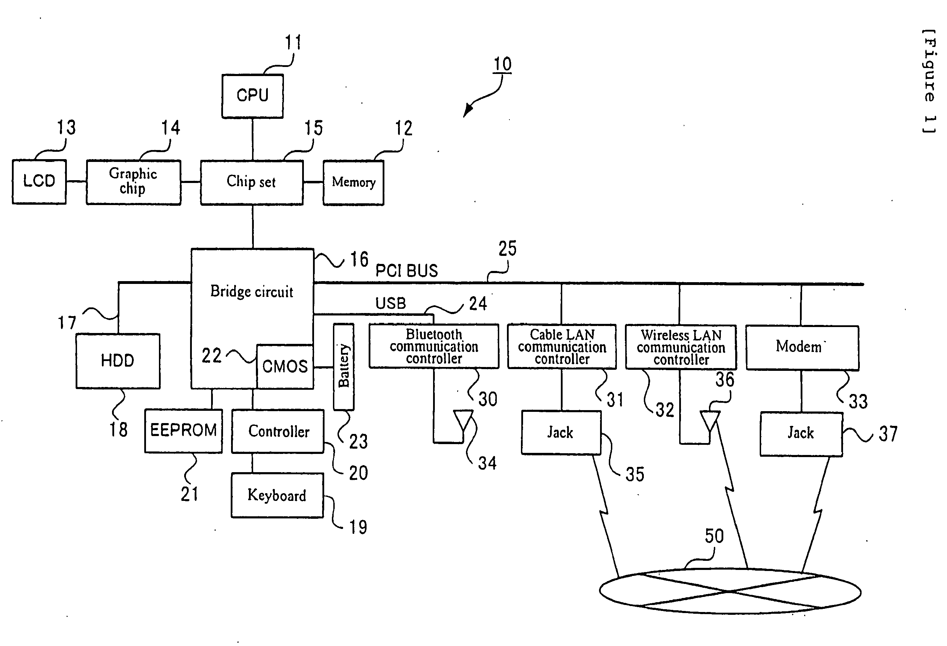

Figure 1 is a diagram for explaining a device configuration of a notebook PC (computer apparatus) 10 according to the embodiment.

As shown in Figure 1, the PC 10 comprises a CPU 11 for performing processes based on a given control program, a memory 12 such as a RAM (Random Access Memory) for storing data to be processed, and a graphic chip 14 for controlling images displayed on a display unit (LCD) 13, which are all connected to a chip set 15.

The chip set 15 is connected to a bridge circuit 16. An HDD 18 is connected to the bridge circuit 16 through an IDE channel 17. Also connected to the bridge circuit 16 are a controller 20, which outputs events based on signals input from a pointing device such a keyboard 19 and mouse (not shown), and an EEPROM (Electrically Erasable and Programmable ROM) 21 storing BIOS (Basic Input/Output System). The BIOS controls components of the PC 10 according to inputs from the keyboard 19 and pointing device.

The bridge circuit 16 contains a CMOS (Complementary Metal Oxide Semiconductor) 22 for storing various settings. The CMOS 22 is continuously provided with power by a battery 23.

Also connected to the bridge circuit 16 are a Bluetooth communication controller (identification information acquisition means, communication means) 30 through a USB (Universal Serial Bus) 24, a cable LAN communication controller 31, a wireless LAN communication controller 32, and a modem 33 through a PCI (Peripheral Component Interconnect) bus 25.

The Bluetooth communication controller 30 controls short-range wireless data communication with another Bluetooth-capable device through an antenna 34. The Bluetooth communication controller 30 controls communication with a Bluetooth-capable device within a range (typically 10 to 100 m) that a radio wave received and sent through the antenna 34 reaches. The Bluetooth-capable device emits a radio wave including Bluetooth device address (hereinafter referred to as a BD address) while power is being supplied to it. The Bluetooth communication controller 30 has the capability of detecting a BD address included in a radio wave received through the antenna 34.

The cable LAN communication controller 31 accesses an external network 50 through a LAN cable (not shown) connected to its jack 35 to control data communication with another computer apparatus over the network 50.

The wireless LAN communication controller 32 accesses the external network 50 through an antenna 36 to control data communication with another computer apparatus over the network 50.

The modem 33 accesses the network 50 through a cable (not shown) connected to its jack 37 over an analog network to control data communication with another computer apparatus over the network 50.

Thus, the PC 10 can connect to the network through any of the Bluetooth, the wireless LAN, the cable LAN, and the analog telephone network.

The cable LAN communication controller 31 and the wireless LAN communication controller 32 may be actually implemented as a single Ethernet^{®} chip. Not all of the Bluetooth communication controller 30, the cable LAN communication controller 31, the wireless LAN communication controller 32, and the modem 33 are mandatory. Network communication capabilities can be provided through the provision of the Bluetooth communication controller 30 alone. If none of the cable LAN communication controller 31, the wireless LAN communication controller 32, and the modem 33 are provided, the PC 10 can use the Bluetooth communication controller 30 to access a LAN access point through short-range wireless communication and, from the LAN access point, access the network 50.

The PC 10 configured as described above uses the Bluetooth communication controller's 30 capability of recognizing devices in a range that the radio wave from the PC 10 reaches to determine the environment of the PC 10 on the basis of the type or other factors of the devices in its vicinity. The PC 10 automatically makes security and other settings according to that environment.

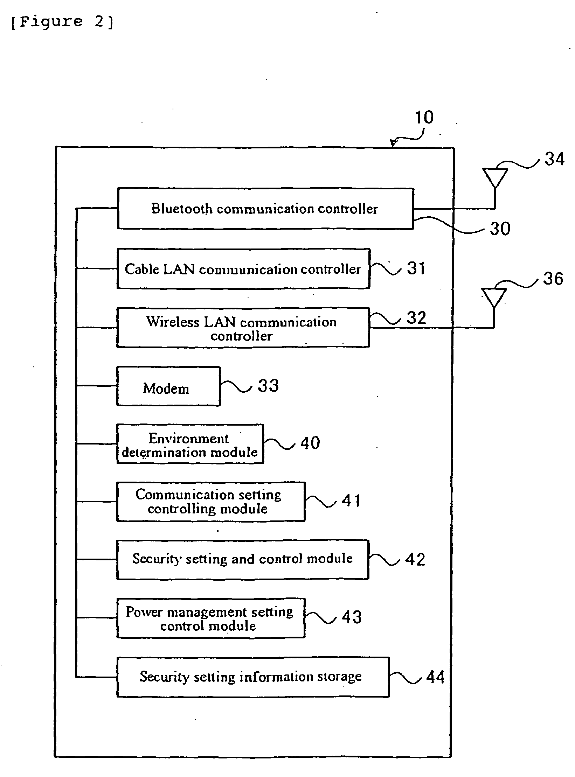

Figure 2 shows a functional configuration of the PC 10 having the device configuration as described above. As shown in Figure 2, the PC 10 has an environment determination module (using environment determination means) 40, a communication setting control module 41, security setting control module (setting modification means) 42, and a power management setting control module (setting modification means) 43, which are functions implemented by the CPU (not shown) performing processes based on programs preinstalled.

The environment determination module 40 collects information about Bluetooth-capable devices through the Bluetooth communication controller 30 to determine the environment of the PC 10.

The communication setting control module 41 makes network communication settings according to the environment determined by the environment determination module 40.

The security setting control module 42 makes security settings according to the environment determined by the environment determination module 40. Information about a number of security setting levels are stored in security setting information storage 44 implemented by data stored in the HDD 18. The security setting control module 42 refers to this information to make security settings according to the environment.

The power management setting control module 43 controls the operating speed of the CPU 11 and the display of the monitor 13 and also controls switching to suspend mode or hibernation mode, according to the environment of the PC 10.

Examples of the environment of the PC 10 will be described below.

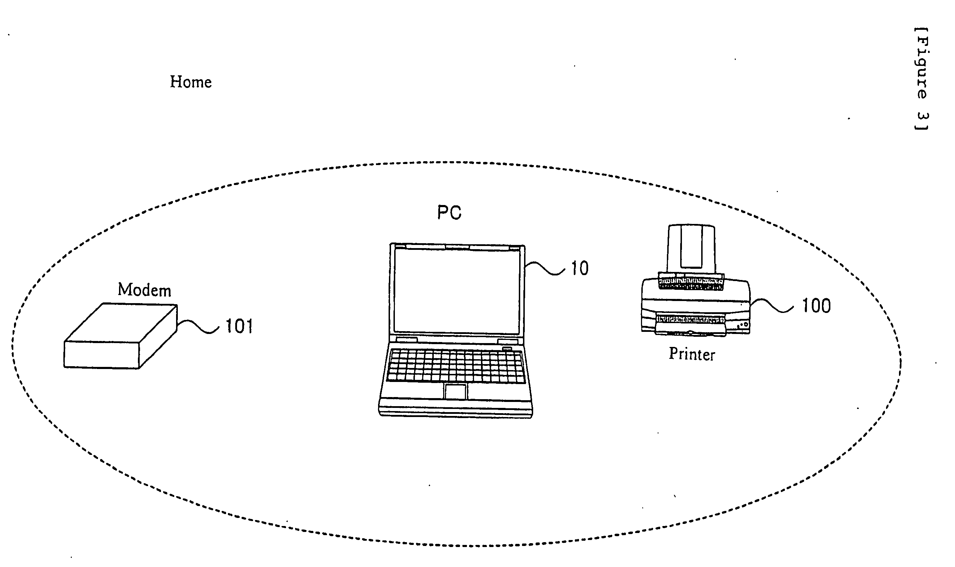

Figure 3 shows an environment for which a security level, called "home" in the present embodiment, is set as will be described later, when the user uses the PC 10 at home.

Other Bluetooth-capable devices, which are a printer 100 and a modem 101, are within the range the Bluetooth radio wave from the PC 10 reaches when the user uses the PC 10 at home.

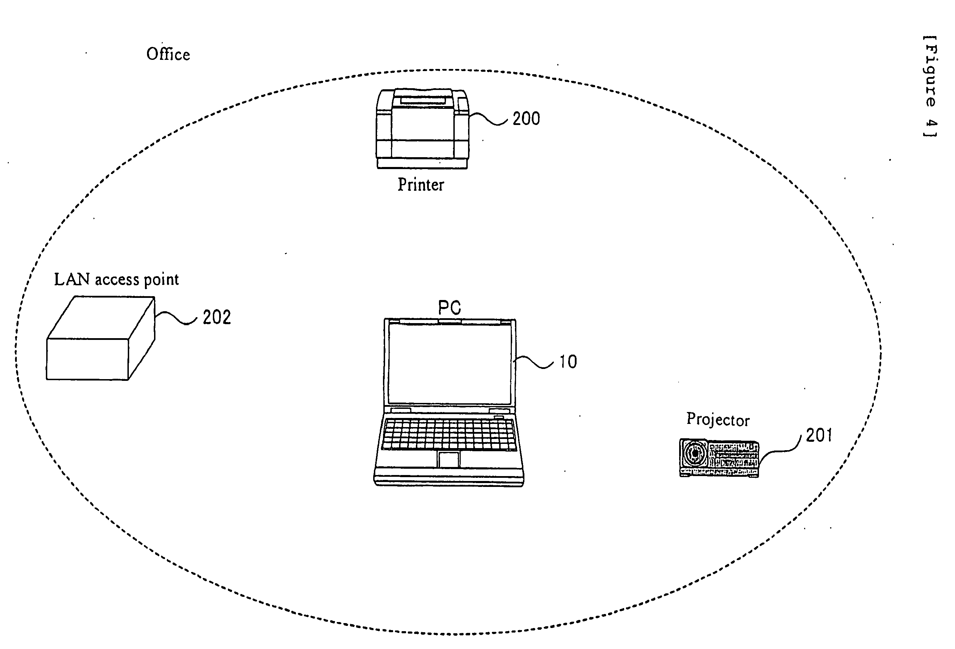

Figure 4 shows an environment for which a security level, called "office" in the present embodiment, is set as will be described later when the user uses the PC 10 at his or her office.

When the user uses the PC 10 in his or her office, other Bluetooth-capable devices, which are a printer 200, a projector 201, and a LAN access point 202 for accessing the network 50, are within the range the Bluetooth radio wave from the PC 10 reaches.

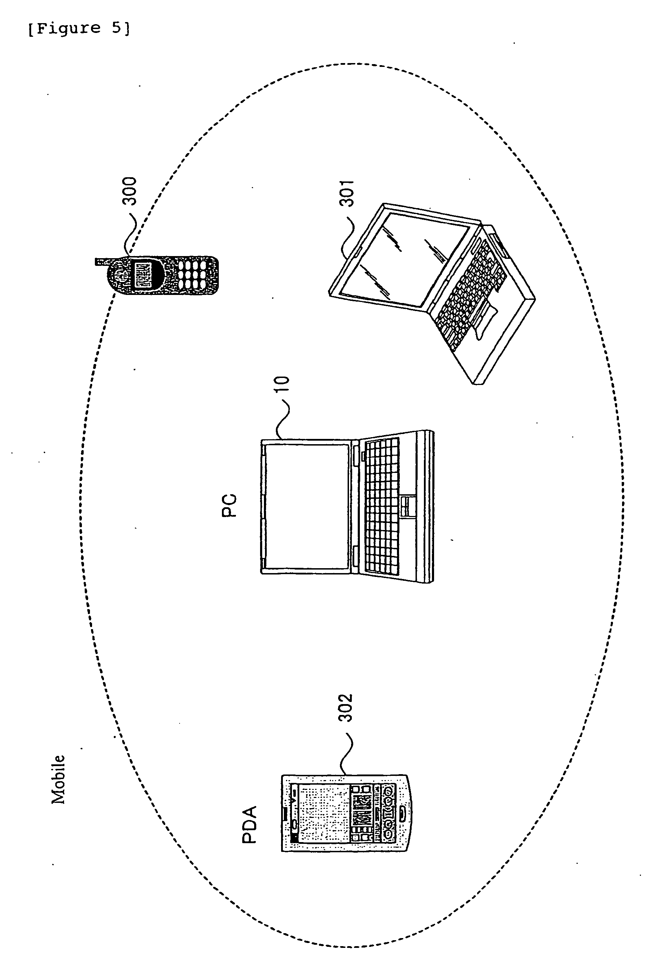

Figure 5 shows an environment for which a security level called "mobile" in the present embodiment is set as will be described later when the user uses the PC 10 on the go.

The following is assumed here. The user has no other Bluetooth-capable devices for his or her own use within the range the Bluetooth radio wave reaches when the user uses the PC 10 on the go. A Bluetooth-capable cellphone 300, PC 301 (which may or may not has the same configuration as that of the PC 10), PDA 302, and other devices owned by other people may exist within the range the Bluetooth radio wave from the PC 10 reaches on a train, in business quarters, or a coffee shop, or any other place.

Examples of these security levels, "home," "office," "mobile," will be described below.

There are three items of security settings, "Authentication," "Authorization," and "Encryption," for Bluetooth communication.

The "authentication" is a mutual authentication between devices communicating through Bluetooth by means of a keyword called a passkey, which is manually input, or a link key, which is a keyword generated automatically on the basis of the passkey.

The "authorization" is a process that is performed each time a service such as file transfer or business-card exchange is performed for controlling whether or not access should be permitted.

The "encryption" is a process that is performed when data is transmitted between devices for encrypting data by means of an encryption key generated from a link key.

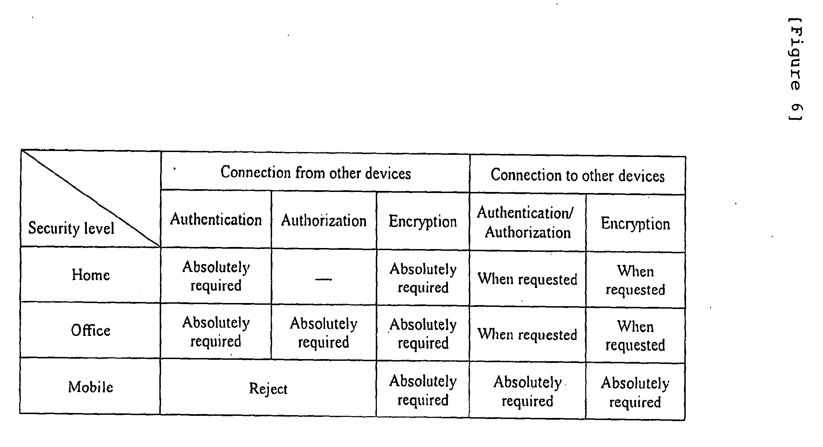

Figure 6 shows exemplary security level settings. The level of security, from highest to lowest, is "home" < "office" < "mobile". The degree of difficulty of access from the PC 10 to an external resource and access from an external resource to the PC 10 becomes more difficult in that order. That is, access control in the PC 10 becomes tighter in that order.

If the security level "home" is set, "authentication" of a device should absolutely be performed, "authorization" may be performed depending on circumstances, and "encryption" of data should absolutely be performed, before the device can connect to the PC 10. When the PC 10 connects to a device, "authentication" of the device, "authorization", and "encryption" are performed if requested by that device.

If the security level "office" is set, "authentication" and "authorization" of the device, and "encryption" of data should absolutely be performed before a device can connect to the PC 10, because highly confidential business data may be exchanged. When the PC 10 connects to a device, "authentication" of the device, "authorization," and "encryption" will be performed if requested by the device.

If the security level "mobile" is set, access from any devices owned by others is always "rejected" because the highest security must be ensured on the go. When the PC 10 connects to a device, "authentication" of the device, "authorization," and "encryption" are absolutely required.

Security levels as shown in Figure 6 may be set by the user selecting from settings beforehand or a number of security levels as shown may be provided by default.

The user must select and set one of the security levels described above according to the environment in which he or she uses the PC 10.

For that purpose, the user activates an application for setting security for the environment.

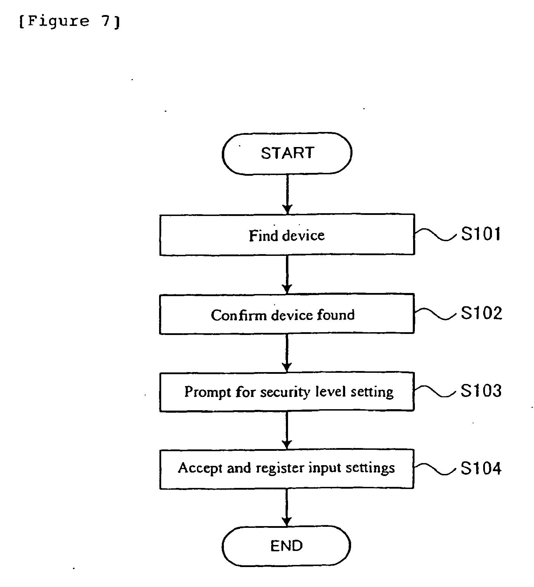

As shown in Figure 7, the application then causes the Bluetooth communication controller 30 in the PC 10 to search for devices in the range the Bluetooth radio wave reaches (step S101). If Bluetooth-capable devices are found in the range, the BD addresses of the devices can be detected (captured). The BD addresses provide the identification information, device information, and address information about the devices.

The PC 10 captures the BD addresses emitted from the devices to confirm the devices in the vicinity of the PC 10 (step S102).

The PC 10 then can display on the monitor 13 information about the devices whose the BD addresses it captured to prompt the user to check them. Thus, the user can select one of devices to which power is continuously supplied from among the devices just captured.

The PC 10 then displays on the monitor 13 a message to prompt the user to set a security level for the PC 10 for the current place (step S103).

The user selects and enters a security level for that place (environment) from among a number of levels as shown in Figure 6.

The PC 10 accepts the selected and entered security level and associates and stores it with the BD address of the detected device in storage such as the HDD 18 to register the security level setting (step S104).

In an environment where the BD addresses of a printer 100 and a modem 101 are detected as shown in Figure 3, for example, the security level "home" selected by the user is registered. In an environment where a printer 200, a projector 201, and a LAN access point 202 are detected, the security level "office" selected by the user is associated with the BD address and registered as shown in Figure 4.

The security setting process accomplished through the series of steps shown in Figure 7 is required to be performed only at places, such as the user's "home" or "office", where the user visits very frequently.

At other places, the security level "mobile" may be set by the user or by default.

In the process described above, settings for performing communication over the network 50 in each environment and settings for the printers 100 and 200 may be stored in the PC 10. For example, settings for using the modem 101 in the example shown in Figure 3 and settings for using the LAN access point 202 in the example shown in Figure 4 may be stored.

Furthermore, a power management setting for each environment may be made in the process described above. For example, in an environment for which the security level "mobile" is set, the processing speed of the CPU 11 and the rotation speed of the HDD 18 may be reduced or power supply to those components which are used only for controlling the AC adapter, not used while the PC 10 is being carried around, may be shut off in order to reduce power consumption.

Once the security setting for the environments has been made, the PC 10 automatically performs the following process to select a security setting for the environment in which the PC 10 is used.

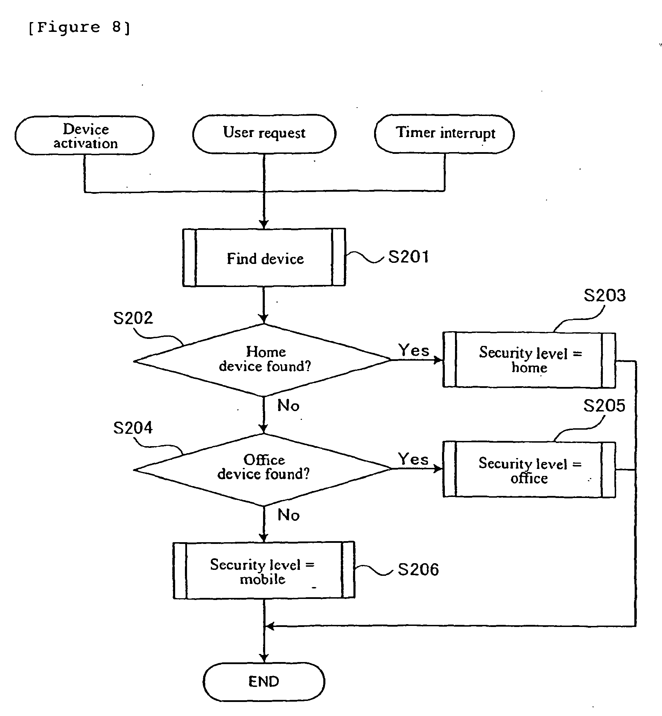

As shown in Figure 8, after the PC 10 system is activated, a request is issued by the user through a predetermined operation, or a preset timer interrupt occurs, then the Bluetooth communication controller 30 in the PC 10 searches for devices within the range the Bluetooth radio wave from the PC 10 reaches (step S201). Then, the BD addresses of devices within the range can be captured.

Then, the environment determination module 40 in the PC 10 determines the environment of the PC 10 at the time on the basis of the BD addresses captured.

For that purpose, the environment determination module 40 determines whether or not BD addresses associated with the security level "home" are included among the BD addresses detected. In other words, the determination module 40 determines whether or not there exist devices that would be found in the environment for which the security level "home" should be set (step S202).

If any of the BD addresses associated with the security level "home" are included among the BD addresses detected, the environment determination module 40 determines that the PC 10 is in an environment for which the security level "home" should be set. Then, the security setting control module 42 switches the security level setting used in Bluetooth communication through the Bluetooth communication controller 30 of the PC 10 to the security level "home" (step S203). In addition, the communication setting control module 41 may change settings on the PC 10 for communication over the network 50 to settings for a device (the modem 101 in the example in Figure 3) whose BD address has been detected. Furthermore, it may automatically change printer settings on the PC 10 to settings for a device (the printer 100 in the example in Figure 3) whose BD address has been detected.

On the other hand, if any of the BD addresses associated with the security level "home" are not included among the BD addresses detected, the environment determination module 40 determines whether or not BD addresses associated with the security level "office" are included among the BD addresses detected. That is, the determination module 40 determines whether or not there exist devices that would be found in the environment for which the security level "office" should be set (step S204).

If any of the BD addresses associated with the security level "office" are included among the BD addresses detected, then the environment determination module 40 determines that the PC 10 is in an environment for which the security level "office" should be set. Then, the security setting control module 42 switches the security level setting used in Bluetooth communication performed by the Bluetooth communication controller 30 of the PC 10 to the security level "office" (step S205). In addition, the communication setting control module 41 may change settings on the PC 10 for communication over the network 50 to settings for a device (the access point 202 in the example in Figure 4) whose BD address has been detected. Furthermore, it may automatically change printer and projector settings on the PC 10 to settings for devices (the printer 200 and the projector 201 in the example in Figure 4) whose BD addresses have been detected.

On the other hand, if the BD addresses associated with the security level "office" are not included among the BD addresses detected, the environment determination module 40 determines that the PC 10 is in an environment for which the security level "mobile" should be set. Then, the security setting controller 42 switches the security level setting used in Bluetooth communication performed by the Bluetooth communication controller 30 of the PC 10 to the security level "mobile" (step S206). In addition, the power management control module 43 may switches to the highest power management level setting.

According to the arrangement described above, the PC 10 can use Bluetooth to search for devices in the vicinity of it to determine the environment in which the PC 10 is used and automatically change the security level setting according to the environment. This can ensure that security level changes are made according to environments in which the PC 10 is used and thereby ensure that always an optimum security environment is provided. Moreover, the usability of the PC 10 is improved because the need is eliminated for the user to change security settings each time the PC 10 is used in a different environment.

Furthermore, if the PC is in an environment for which the security level "home" or "office" should be set but devices that would be found in that environment cannot be detected in the process for determining the environment because of the conditions of wireless communication or others, the highest security level, "mobile," is set. This provides a fail-safe function.

In addition, settings for network communication, power management, printers, projectors and other devices can be automatically changed according to the environment determined. This also can significantly improve the usability of the PC 10.

Moreover, Bluetooth is used in making these settings. Bluetooth does not require that the PC 10 send information about itself to other deices in an environment for which security level "mobile" should be set because it does not require data communication between the PC 10 and the devices as long as they are supplied with power. Thus, the advantages described above can be provided with a high level of security being ensured.

The security levels shown in Figure 6 are provided by way of example only. Two levels, or more than three levels of security may be set. Furthermore, the security level categories, "home," "office," and "mobile" can be changed as appropriate.

Moreover, the same security level "office" can be set for a number of environments such as the user's desk at office and a meeting room used by the user, for example. In that case, settings for communication and power management for each of the environments can be stored in the PC 10 so that the settings can be automatically changed according to the environments.

Bluetooth and BD addresses uniquely assigned to devices are used to identify an environment in the embodiment described above.

A program for automatically changing security settings according to environments as described with respect to the present embodiment may be embodied on a storage medium as below.

The program to be executed by a computer apparatus may be stored on a storage medium such as a CD-ROM, DVD, memory, or hard disk in a computer-readable manner.

The computer apparatus according to the present invention is not limited to a PC. It may of course be PDA, a cellphone, or any of various other devices.

According to the present invention, setting changes can be reliably made according to environments and a high-security network-connection environment can be always ensured, as described above.

## Claims

1. A portable computer apparatus (10) comprising:
means for acquiring identification information (30) of another device existing around the computer apparatus by communicating with the other device;
usage environment determination means (40) for determining the place where the computer apparatus is presently being used by identifying the other device existing around the computer apparatus based on the acquired identification information; and
means for selecting a security setting (42) of the computer apparatus based on the determined place where the computer apparatus is used,
**characterized in that**
the computer apparatus further comprises means for communicating using Bluetooth (30), and the acquisition means acquires a Bluetooth device address as the identification information from the other device being capable of communication by using Bluetooth.

2. The computer apparatus of claim 1,further comprising a Bluetooth communication controller (30) that controls short-range wireless data with communication with the other Bluetooth-capable device through an antenna (34) within a range that a radio wave received and sent through the antenna reaches, wherein the Bluetooth communication controller has the capability of detecting a Bluetooth device address included in a radio wave received through the antenna.

3. The computer apparatus of claim 1, wherein
the selecting means is adapted to select a security setting corresponding to a prescribed place if the usage environment determination means determines that the computer apparatus is used at the prescribed place, and to select a security setting with a security level higher than that for the prescribed environment if the usage environment determination means determines that the computer apparatus is used outside the prescribed place.

4. The computer apparatus of claim 1, wherein
the selecting means is adapted to select a setting for controlling power consumption in the computer apparatus according to the determined place where the computer apparatus is used.

5. A method for selecting a security setting of a portable computer apparatus (10) comprising means for communicating using Bluetooth (30), comprising the steps of:
acquiring identification information (S102) of another device existing around the computer apparatus by communicating with the other device, wherein a Bluetooth device address is acquired as the identification information from the other device being capable of communication by using Bluetooth;
determining (S103) the place where the computer apparatus is presently being used by identifying the other device existing around the computer apparatus based on the acquired identification information; and
selecting (S104) a security setting of the computer apparatus based on the determined place where the computer apparatus is used.

6. The method of claim 5, wherein
the selecting step comprises the step of selecting the level of the security setting according to whether or not the identification information about the device is registered beforehand.

7. The method of claim 6, wherein
if the identification information about the device is not registered, the level of the security setting is changed to a level higher than the current level.

8. A program for causing a portable computer apparatus to perform a predetermined process, said process comprising the steps of any preceding method claim.

## Patentansprüche

1. Eine tragbare Computervorrichtung (10) aufweisend:
- Mittel zum Erlangen von Identifikations-Informationen (30) eines anderen, in der Nähe der Computervorrichtung existierenden Geräts mittels Kommunizierens mit dem anderen Gerät;
- Nutzungsumgebungs-Ermittlungs-Mittel (40) zum Ermitteln des Orts, an dem die Computervorrichtung momentan genutzt wird, mittels Identifizierens des anderen, in der Nähe der Computervorrichtung existierenden Geräts basierend auf den erlangten Identifikations-Informationen; und
- Mittel zum Auswählen einer Sicherheitseinstellung (42) der Computervorrichtung basierend auf dem ermittelten Ort, an dem die Computervorrichtung genutzt wird,
**dadurch gekennzeichnet, dass**
die Computervorrichtung weiterhin Mittel zum Kommunizieren unter Verwendung von Bluetooth (30) aufweist und das Erlangungs-Mittel eine Bluetooth-Geräteadresse als die Identifikations-Informationen von dem anderen Gerät, das zur Kommunikation unter Verwendung von Bluetooth fähig ist, erlangt.

2. Computervorrichtung nach Anspruch 1, weiterhin aufweisend einen Bluetooth-Kommunikations-Controller (30), der eine kurzreichweitige drahtlose Datenkommunikation mit dem anderen, Bluetooth-fähigen Gerät durch eine Antenne (34) innerhalb einer Reichweite, die eine Radiowelle, die durch die Antenne empfangen und gesendet wird, erreicht, steuert, wobei der Bluetooth-Kommunikations-Controller die Fähigkeit besitzt, eine Bluetooth-Geräteadresse, die in einer durch die Antenne empfangenen Radiowelle beinhaltet ist, zu detektieren.

3. Computervorrichtung nach Anspruch 1, wobei das AuswahlMittel angepasst ist, eine Sicherheitseinstellung auszuwählen, die sich auf einen vorgegebenen Ort bezieht, falls das Nutzungsumgebungs-Ermittlungs-Mittel ermittelt, dass die Computervorrichtung an dem vorbestimmten Ort genutzt wird, und eine Sicherheitseinstellung mit einem Sicherheitsniveau auszuwählen, das höher ist als das für die vorbestimmte Umgebung, falls das Nutzungsumgebungs-Ermittlungs-Mittel ermittelt, dass die Computervorrichtung außerhalb des vorbestimmten Orts genutzt wird.

4. Computervorrichtung nach Anspruch 1, wobei das AuswahlMittel angepasst ist, eine Einstellung zum Steuern des Leistungsverbrauchs in der Computervorrichtung in Abhängigkeit von dem ermittelten Ort, an dem die Computervorrichtung genutzt wird, auszuwählen.

5. Verfahren zum Auswählen einer Sicherheitseinstellung einer tragbaren Computervorrichtung (10) aufweisend Mittel zum Kommunizieren unter Verwendung von Bluetooth (30), wobei das Verfahren folgende Schritte aufweist:
- Erlangen von Identifikations-Informationen (S102) eines anderen, in der Nähe der Computervorrichtung existierenden Geräts mittels Kommunizierens mit dem anderen Gerät, wobei eine Bluetooth-Geräteadresse als die Identifikations-Informationen von dem anderen Gerät, das zur Kommunikation unter Verwendung von Bluetooth fähig ist, erlangt wird;
- Ermitteln (S103) des Orts, an dem die Computervorrichtung momentan genutzt wird, mittels Identifizierens des anderen, in der Nähe der Computervorrichtung existierenden Geräts basierend auf den erlangten Identifikations-Informationen; und
- Auswählen (S104) einer Sicherheitseinstellung der Computervorrichtung basierend auf dem ermittelten Ort, an dem die Computervorrichtung genutzt wird.

6. Verfahren nach Anspruch 5, wobei der Auswahl-Schritt den Schritt eines Auswählens des Niveaus der Sicherheitseinstellung in Abhängigkeit davon, ob die Identifikations-Informationen über das Gerät zuvor registriert sind oder nicht, beinhaltet.

7. Verfahren nach Anspruch 6, wobei, falls die Identifikations-Informationen über das Gerät nicht registriert sind, das Niveau der Sicherheitseinstellung auf ein Niveau verändert wird, das höher ist als das momentane Niveau.

8. Programm zum Bewirken, dass eine tragbare Computervorrichtung einen vorbestimmten Arbeitsablauf ausführt, wobei der Arbeitsablauf die Schritte nach einem der vorhergehenden Verfahrensansprüche aufweist.

## Revendications

1. Ordinateur portable (10) comprenant :
un moyen d'acquisition d'une information d'identification (30) d'un autre dispositif en existence à proximité de l'ordinateur en communiquant avec l'autre dispositif ;
un moyen de détermination de l'environnement d'utilisation (40) pour déterminer le lieu d'utilisation actuel de l'ordinateur en identifiant l'autre dispositif en existence à proximité de l'ordinateur sur la base de l'information d'identification qui a été acquise ; et
un moyen de sélection d'un réglage de sécurité (42) de l'ordinateur basé sur le lieu d'utilisation de l'ordinateur qui a été déterminé,
**caractérisé en ce que**
l'ordinateur comprend en outre un moyen de communication utilisant Bluetooth (30), et que le moyen d'acquisition acquiert une adresse du dispositif Bluetooth en tant que l'information d'identification de l'autre dispositif capable de communiquer en utilisant Bluetooth.

2. Ordinateur selon la revendication 1, comprenant en outre un contrôleur de communication Bluetooth (30) qui contrôle les données sans fil de courte portée de communication échangées avec l'autre dispositif capable d'utiliser Bluetooth par la voie d'une antenne (34) dans une portée que peut atteindre une onde radio reçue et transmise par la voie de l'antenne, le contrôleur de communication Bluetooth étant capable de détecter une adresse du dispositif Bluetooth incluse dans une onde radio reçue par la voie de l'antenne.

3. Ordinateur selon la revendication 1, dans lequel le moyen de sélection est adapté à sélectionner un réglage de sécurité correspondant à un lieu d'utilisation prescrit si le moyen de détermination de l'environnement d'utilisation détermine que l'ordinateur est utilisé dans le lieu prescrit, et de sélectionner un réglage de sécurité ayant un niveau de sécurité supérieur à celui de l'environnement prescrit si le moyen de détermination de l'environnement d'utilisation détermine que l'ordinateur est utilisé hors du lieu prescrit.

4. Ordinateur selon la revendication 1, dans lequel le moyen de sélection est adapté à sélectionner un réglage pour contrôler la consommation électrique de l'ordinateur en fonction du lieu d'utilisation de l'ordinateur qui a été déterminé.

5. Procédé pour la sélection d'un réglage de sécurité d'un ordinateur portable (10) comprenant un moyen pour la communication utilisant Bluetooth (30), comprenant les étapes :
d'acquisition d'une information d'identification (S102) d'un autre dispositif en existence à proximité de l'ordinateur en communiquant avec l'autre dispositif, dans lequel une adresse du dispositif Bluetooth est acquise en tant qu'information d'identification de l'autre dispositif capable de communiquer en utilisant Bluetooth ;
de détermination (S103) du lieu où l'ordinateur est utilisé actuellement en identifiant l'autre dispositif en existence à proximité de l'ordinateur sur la base de l'information d'identification qui a été acquise ; et
de sélection (S104) d'un réglage de sécurité (42) de l'ordinateur basé sur le lieu d'utilisation de l'ordinateur qui a été déterminé.

6. Procédé selon la revendication 5, dans lequel :
l'étape de sélection comprend l'étape de sélection du niveau de réglage de sécurité selon que l'information d'identification du dispositif est ou n'est pas déjà enregistrée.

7. Procédé selon la revendication 6, dans lequel :
si l'information d'identification du dispositif n'est pas enregistrée, le niveau de réglage de sécurité est changé pour le mettre à un niveau supérieur au niveau actuel.

8. Programme pour commander à un ordinateur portable d'exécuter un processus prédéterminé, ledit processus comprenant les étapes contenues dans l'une quelconque des revendications précédentes relatives au procédé concerné.
